# EUROPEAN PATENT SPECIFICATION

(11) **EP 0 552 594 B1**
(45) Date of publication and mention of the grant of the patent: **28.08.1996**
(21) Application number: 92830675.2
(22) Date of filing: 16.12.1992
(51) Int. Cl.: A01K 63/04, C02F 3/06

(54) **A pressurised percolating filter of the type used for the regeneration of water in aquariums**
Unter Druck betriebenes Rieselfilter zum Regenieren von Aquariumwasser
Percolateur sous pression de régénération de l'eau pour aquariums

(30) Priority: 20.01.1992 IT RM920041
(43) Date of publication of application: 28.07.1993
(73) Proprietor: Romagnoli, Silvestro, I-00141 Roma (IT)
(72) Inventor: Romagnoli, Silvestro, I-00141 Roma (IT)
(74) Representative: Lanzoni, Luciano

(56) References cited:
- EP-A- 0 445 491
- DE-A- 2 705 070
- DE-A- 3 638 239
- DE-A- 3 805 770
- GB-A- 2 057 416
- GB-A- 2 131 710

## Description

The invention relates to a pressurised percolating filter of the type used for the regeneration of water in aquariums. Such a filter is known for example from DE-A-3,805,770.

The regeneration or purifying of water comprises a biological-bacterial filtering, obtained by making the water run through a percolating support or substratus on which aerobic bacteria colonise and decompose polluting substances.

The aerobic bacteria, while biologically decomposing the polluting substances, consume a large quantity of oxygen, for which reason it is necessary to make as much oxygen available to them as possible.

In known-type percolating filters the water, running finely on the substratus, becomes well oxygenated on contact with the air present inside the filter. All the same, in order to improve the efficiency of the filter it has been felt necessary to increase the oxygenation of the water.

At present for this aim an oxygen reactor is used, consisting of an apparatus where the percolating substratus is crossed by the water. In order that the assumption of oxygen is guaranteed to be of the highest possible level, the reactor is permanently fed with new air through an aerator which continually renews the air. By regulating the flow both of the water and the air an increase in atmospheric pressure is obtained internally to the filtering chamber which permits a greater solubility of the oxygen in the water so as to obtain high values of saturation and thus benefit the aerobic bacteria.

However, a percolator filter associated to an oxygen reactor of the type described, even if efficient, is certainly expensive and complex, and limited in its practical applications, by the necessity to predispose safety systems which * intervene in case of malfunctioning of the aerator or other parts of the reactor, to prevent the death by asphyxia of the bacterial colony.

The present invention aims to eliminate the above-mentioned inconvenients.

An aim of the present invention is to provide a percolating filter of small dimensions, constructionally simple but at the same time able to provide higher filtering performance, simple in its functioning and requiring little maintenance.

The invention, as it is characterised in the claims that follow, solves the problem by providing a pressurised percolating filter of the type used for the regeneration of water in aquariums, comprising in a closed receptacle, starting from the top and moving downwards, a prefiltering chamber inferiorly defined by a holed bottom, an intermediate chamber, a percolation chamber filled with spheres or similar conventional elements, made in plastic material for the settling of bacterial colonies, and a collection chamber of the regenerated water communicating with an aquarium tub by means of a feed pipe that, characterised in that the said prefiltering chamber is fed from the outside, by means of a pump, through a single leader pipe, with a mixture of air and water to be regenerated and comprises, in the said holed bottom, which is equipped with a plurality of holes, a lowered portion in the shape of a tub equipped at its bottom with a smaller number of calibrated holes with respect to those in the remaining part of the holed bottom; the level of the water in the said tub activating a float valve for the opening and closing control of an inflow opening for air from the outside; the said inflow opening being closed by the said float valve when the percolator filter is in operation.

Further advantages and characteristics of the present invention will better emerge from the detailed description that follows, made with reference to the accompanying drawings, which represent a preferred embodiment here illustrated in the form of a non-limiting example, and in which:

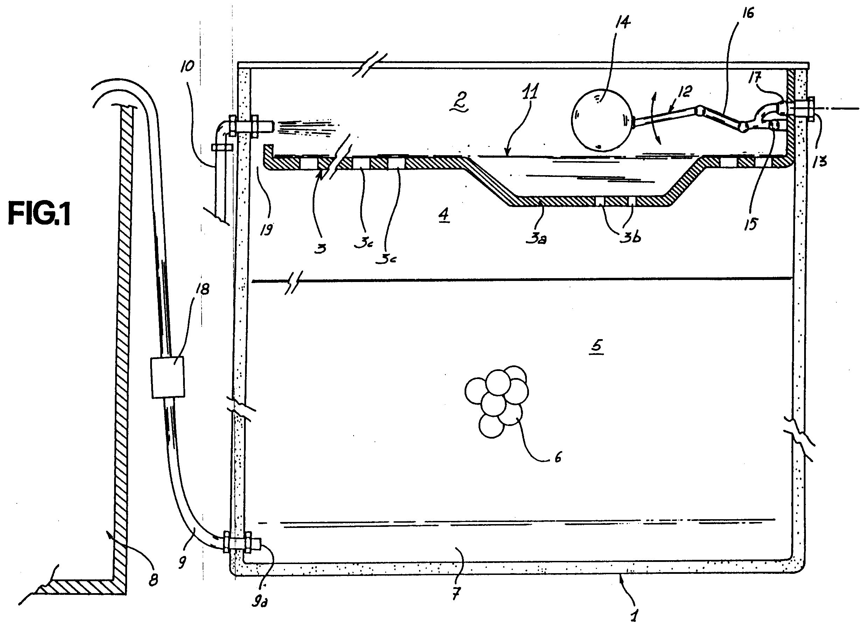

- Figure 1 shows a percolator filter in transversal section according to the invention.

In accordance with the present invention, 1 denotes a closed recipient, at which inside, starting from the top and moving downwards, there is a prefiltering chamber 2 inferiorly defined by a holed bottom 3, an intermediate chamber 4, a percolation chamber 5 filled with percolating material, such as for example common plastic spheres 6, for the settling of bacterial colonies, and a collection chamber 7 of the regenerated water communicating with an aquarium tub 8 by means of a feed pipe 9. The prefiltering chamber 2 is fed from the outside by means of a pump, through a single leader pipe 10 containing a mixture of air and water to be regenerated. The holed bottom 3 exhibits a lowered portion in the shape of a small tub 3a equipped at its bottom with a smaller number of calibrated holes 3b with respect to the holes 3c in the remaining part of the holed bottom 3. The level of the water in the small tub 3a, denoted by 11, activates a float valve 12 for the opening and closing command of an inflow hole 13 for air from the outside. The float valve 12 conventionally comprises a float 14, hinged to a pivot 15 by means of a small shaft 16 rigidly bearing an obturator 17.

In figure 1, the level of the water 11 is shown during working conditions, for which reason the float valve 12 has closed, with its obturator 17, the inflow hole 13, preventing the exit of pressurised air from the inside of the percolating filter.

Inside the recipient, obviously, the air and the water form two strati, one over the other.

Advantageously the said holed bottom 3 exhibits, in proximity to at least one of the lateral walls of the recipient 1, at least one overflow projection with an overflow opening 19 communicating with the said percolation chamber 5. In this way the possibility is avoided of having an excessive quantity of water in the prefiltering chamber 2 inflowing from the flow pipe 10, in relation to the dripping capacity of the holes 3c. The collection chamber 7 is connected through the feed pipe 9 to the tub 8; for this reason, as soon as the level of the water has covered its inlet 9a, the collection chamber 7 will begin to increase its internal pressure up until it overcomes the feeding pipe resistance (which pipe is advantageously equipped with a regulatable choke valve 18, and will return a mixture of air and water to the tub 8.

In the case of air-water pump blockage (not shown in the figure), through the said flow pipe 10, the small tub 3a of the holed bottom 3 empties, through the calibrated holes 3b, causing the opening of the inflow hole 13 by the float valve 12. Thus atmospheric air is introduced into the closed recipient and the death by asphyxia of the bacterial colony is avoided.

The percolating filter according to the invention can be advantageously associated upstream, by means of the said single flow pipe 10 of the water-air mixture to the said prefiltering chamber 2, to a pump and to a Venturi tube connected to a water-air collecting device in proximity to the free surface of an aquarium tub, object of another patent application by the same owner of the present invention. Downstream, the percolation filter is connected, through the said feed pipe 9 to an aquarium tub 8 by means of a syphon, specifications being envisaged which prevent the flooding of the filter in the percolation chamber 5.

As has been mentioned above, the prefiltering chamber 2 of the percolator filter, below the level of the flow pipe 10 of the air and water to be regenerated, comprises, in its said holed bottom 3, a lowered portion in the shape of a small tub 3a. The small tub 3a fills with water since the proportion between the load through the holes 3c of the holed bottom 3 and the flow of the water of the flow pipe 10 of the mixture is to the advantage of the latter. The small tub 3a in its turn is equipped with one or more calibrated holes 3b so that the small dripping which the said calibrated holes 3b produce with respect to the water they receive does not empty the small tub 3a during normal functioning.

The float valve 12 of the said small tub 3a, during functioning of the filter, closes the inflow hole 13 of communication with air from the atmosphere, thus not permitting the exit of air from the inside of the filter. In the case of blockage of the feed pump of water and air, the small tub 3a empties causing the opening of the float valve 12 and thus allowing air from the atmosphere to pass inside the closed recipient 1, so as to avoid the death by asphyxia of the bacterial colony.

One of the advantages obtained through the invention consists essentially in the fact that there is no aerator in the present percolator filter, and it is possible to obtain only by regulating the air- and water- outflow from the prefiltering chamber 2 the desired pressure inside the said prefiltering chamber 2 and consequently a greater solubility of the oxygen, thus optimising the work of the bacteria.

The head of the above-mentioned pump ensures that a mixture of atmospheric air and water enters the filtering chamber at a certain pressure. In this way, since in the filter air and water stratify, naturally the air above and the water beneath, the chamber immediately begins to refill with water and air. But in proximity to the bottom, the said collection chamber 7 is connected to the feed pipe 9 of the mixture of air and regenerated water from the tub; for this reason the collection chamber 7 begins to increase its internal pressure up until the said pressure overcomes the resistance of the head of the feed pipe 9, equipped with a regulable choke valve 18, and reintroduces the air-water mixture into the tub. Thus a continuous exchange of air and water is obtained.

A further advantage of the invention is the use of carbon dioxide, produced as a catabolite of the bacterial activity, which because of the pressurised atmosphere is more quickly dissolved in the water, with a consequent benefit for the aquatic plants and algae.

A still further advantage of the invention consists in the fact that the percolator filter object of the invention can be manufactured in modular form, that is in a shape made-to-measure for aquariums already in existence on the market.

## Claims

1. A pressurised percolating filter, of the type used for the regeneration of water in aquariums, comprising in a closed receptacle (1), from the top downwards, a prefiltering chamber (2) inferiorly defined by a holed bottom (3), an intermediate chamber (4), a percolation chamber (5) filled with percolation material (6) for the settling of bacterial colonies, and a collection chamber (7) of regenerated water communicating with an aquarium tub (8) by means of a feed pipe (9), characterised in that the said prefiltering chamber (2) is fed from the outside, by means of a pump, through a single leader pipe (10), with a mixture of air and water to be regenerated and comprises, in the said holed bottom (3), which is equipped with a plurality of holes (3c), a lowered portion in the shape of a tub (3a) equipped at its bottom with a smaller number of calibrated holes (3b) than those in the remaining part of the holed bottom (3); the level (11) of the water in the said tub (3a) activating a float valve (12) for the opening and closing control of an inflow opening (13) for air from the outside; the said inflow opening (13) being closed by the said float valve (12) when the percolator filter is in operation.

2. A filter as in claim 1, characterised in that a regulatable choke valve (18) is present on the said feed pipe (9) of the said tub (8).

3. A filter as in claim 1, characterised in that the said holed bottom (3) exhibits in proximity to at least one of the recipient (1) lateral walls at least one overflow projection with an overflow opening (19) communicating with the said percolation chamber (5).

## Patentansprüche

1. Ein unter Druck betriebenes Rieselsfilter zum regenerieren von Aquariumwasser, das umfaßt: eine Vorfilterkammer (2), die unten durch einen gelochten Boden (3) abgeschlossen wird, in einem geschlossenen Behälter (1); darunter eine Zwischenkammer (4), darunter eine mit Rieselmaterial (6) gefüllte Rieselkammer (5) zum Absetzen von Bakterienkolonien und darunter eine Sammelkammer (7) für aufbereitetes Wasser, wobei diese Sammelkammer über eine Zufuhrleitung (9) mit einem Aquariumbecken verbunden ist, dadurch gekennzeichnet, daß der genannten Vorfilterkammer (2) von außen durch eine einzige Leitung (10) über eine Pumpe eine Mischung von Luft und aufzubereitendem Wasser zugeführt wird, und dadurch, daß sie an dem genannten gelochten Boden (3), der eine Vielzahl von Löchern (3c) aufweist, einen abgesenkten Teil in Form eines Beckens (3a) aufweist, das an seinem Boden eine kleinere Anzahl von kalibrierten Löchern (3b) als der verbleibende Teil des gelochten Bodens (3) aufweist; der Pegel (11) des Wassers in dem genannten Becken (3a) betätigt ein Schwimmerventil (12) zum Öffnen und Schließen der Einlaßöffnung (13) für Luft von außen; die genannte Einlaßöffnung (13) wird von dem genannten Schwimmerventil (12) geschlossen, wenn der Rieselfilter in Betrieb ist.

2. Ein Filter gemäß Anspruch 1, dadurch gekennzeichnet, daß in der Zufuhrleitung (9) des genannten Beckens (8) ein Drosselventil (18) vorhanden ist.

3. Ein Filter gemäß Anspruch 1, dadurch gekennzeichnet, daß der genannte gelochte Boden (3) in der Nähe von zumindest einer der Seitenwände des Behälters (1) zumindest eine Überlaufnase mit einer Überlauföffnung (19) aufweist, die mit der genannten Rieselkammer (5) verbunden ist.

## Revendications

1. Un percolateur sous pression, du type généralement utilisé pour régénérer l'eau dans les aquariums, comprenant, dans un récipient fermé (1), de haut en bas, une chambre de préfiltrage (2) terminée en bas par un fond troué (3), une chambre intermédiaire (4), une chambre de filtrage (5) remplie de matériau de filtrage (6) destiné à retenir les colonies bactériennes, et une chambre qui recueille l'eau régénérée (7) et qui est en communication avec la cuve d'un aquarium (8) au moyen d'un tuyau d'alimentation (9), caractérisé par le fait que ladite chambre de préfiltrage (2) est alimentée de l'extérieur au moyen d'une pompe, à travers un unique tuyau d'amenée (10), avec un mélange d'air et d'eau qui doivent être régénérés, et qu'elle comprend, dans ledit fond trous (3), lequel est muni d'une pluralité de trous (3c), une portion plus basse ayant la forme d'un bac (3a) muni au fond d'un nombre de trous calibrés (3b) plus petit que le nombre de ceux qui sont dans la partie restante du fond troué (3); le niveau (11) de l'eau dans ledit bac (3a) faisant marcher une soupape à flotteur (12) destinée à commander l'ouverture et la fermeture d'une ouverture d'arrivée (13) de l'air venant de l'extérieur; ladite ouverture d'arrivée (13) étant fermée par ladite soupape à flotteur (12) quand le percolateur est en fonction.

2. Un percolateur comme celui de la revendication 1, caractérisé par le fait qu'il se trouve un papillon réglable (18) sur ledit tuyau d'alimentation (9) de ladite cuve (8).

3. Un percolateur comme celui de la revendication 1, caractérisé par le fait que ledit fond troué (3) présente à proximité d'au moins une des parois latérales du récipient (1) au moins une saillie de trop-plein avec une ouverture de trop-plein (19) qui communique avec ladite chambre de filtrage (5).
